# EUROPEAN PATENT APPLICATION

(11) **EP 4 333 393 A1**
(43) Date of publication of application: **06.03.2024**
(21) Application number: 22275122.4
(22) Date of filing: 01.09.2022
(51) Int. Cl.: H04L 45/12, H04L 45/24, H04W 84/18

(54) **COMMUNICATION NETWORK**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A communication network comprising a plurality of network nodes. Each network node in the plurality is configured to: identify, for each of the other network nodes in the plurality, one or more signal transmission paths from the network node to the other network node; determine, for each of identified signal transmission paths, one or more performance metrics associated with the signal transmission path; and route network traffic addressed to the other node on the basis of the determined one or more performance metrics.

## Description

### FIELD

The present invention relates to networking and communications. In particular, the present invention relates to a communication network comprising a plurality of network nodes and a method of operating such a communication network.

### BACKGROUND

Communication networks typically comprise a plurality of network nodes and a plurality of network links, over which data is transmitted between the network nodes. The flow of network traffic between the network nodes is typically based on link costs assigned to each of the network links. The link cost characterises one or more aspects of the performance of the network link and therefore provides information which can be used to inform the routing of traffic through the communication network. Some communication networks employ adaptive routing, in which the link costs are determined automatically in order to optimise the transmission of traffic through the network. Adaptive routing can allow a network to adapt to changes in the performance provided by a signal bearer underlying a given network link. Such functionality is generally enabled by configuring the communication network in a "hub-and-spoke" topology (also known as a star topology).

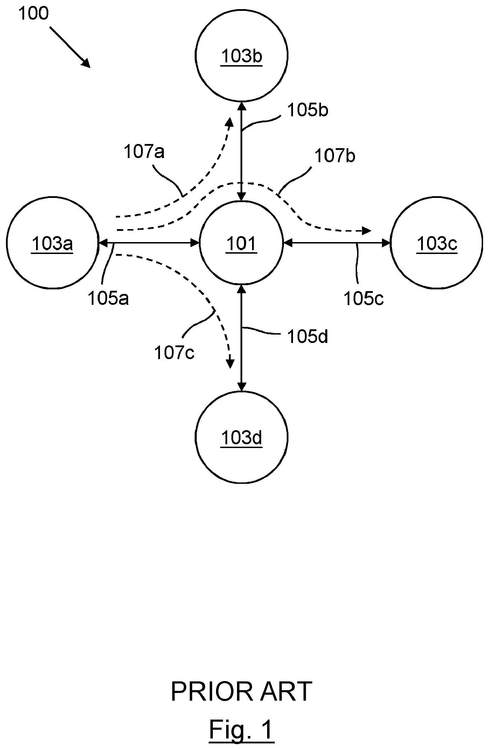

Figure 1 shows a schematic view of a communication network 100 of the prior art having a "hub-and-spoke" topology. The communication network 100 comprises a hub network node 101 and four end network nodes 103a, 103b, 103c, 103d. Each of the end network nodes 103a, 103b, 103c, 103d is connected only to the hub network node 101 by a respective network link 105a, 105b, 105c, 105d. Thus, any network traffic to be transmitted between two of the end network nodes 103a, 103b, 103c, 103d must be transmitted via the hub network node 101. For example, network traffic at a first end network node 103a addressed to a second end network node 103b, must be transmitted first to hub network node 101 via network link 105a and then on to end network node 103b via network link 105b. Signal transmission paths from the first end network node 103a to each of the other end network nodes 103b, 103c, 103d are illustrated by dashed lines 107a, 107b, 107c. Note that each of the signal transmission paths 107a, 107b, 107c passes via the hub network node 101.

The hub network node 101 operates to control and coordinate the transmission of data over the communication network 100 between the end network nodes 103a, 103b, 103c, 103d. The hub network node 101 also operates to monitor the performance of the network links 105a, 105b, 105c, 105d. On the basis of the monitoring, the hub network node 101 assigns and stores a link cost associated with each of the network links 105a, 105b, 105c, 105d. Where more than one possible signal transmission path exists between the hub network node 101 and a destination end network node, the hub network node 101 forwards traffic received at the hub network node 101 based on those stored link costs.

However, such a "hub-and-spoke" architecture is unsuitable for use in a deployed military network, due to the changeable operating conditions and topology of such networks. In particular, deployed military networks are required to adapt to changes in the network topology (which can occur, for example, due to nodes in the network moving in and out of range of other nodes, jamming of nodes, and/or damage to nodes) and must be resilient to attempts by malicious actors to disrupt the communication network. The hub network node 101 in a "hub-and-spoke" architecture constitutes an unacceptable single point of failure for the communication network. Thus, existing adaptive routing techniques are unsuitable for use in deployed military networks. Deployed military networks therefore generally utilise statically assigned routing costs, in which link costs are manually assigned prior to deployment. However, such static link costs provide sub-optimal performances in the changeable operating conditions of the deployed military network.

The present invention seeks to overcome these problems. Alternatively or additionally, the present invention seeks to provide an improved communication network and method of operating a communication network.

### SUMMARY

According to a first aspect of the present invention, there is provided a communication network comprising a plurality of network nodes, wherein each network node in the plurality is configured to:
identify, for each of the other network nodes in the plurality, one or more signal transmission paths from the network node to the other network node,
determine, for each of identified signal transmission paths, one or more performance metrics associated with the signal transmission path; and
route network traffic addressed to the other node on the basis of the determined one or more performance metrics.

By providing a communication network in which each network node is configured to identify signal transmission paths to the other network nodes in the network and determine one or more performance metrics characterising the performance of those signal transmission paths, the present invention can enable the distribution of adaptive routing functionality across all of the network nodes in the communication network. In particular, in the communication network of the present invention each network node in the communication network independently determines and maintains its own metrics on the performance of the communication network and dynamically routes network traffic on the basis of those independently determined metrics. Thus, the present invention enables adaptive routing without the need for a "hub-and-spoke" architecture or a centralised control unit to coordinate transmission of traffic over the communication network. This can provide improved network performance by providing enabling more optimal routing of network traffic through the communication network without introducing a single point of failure to the communication network.

It may be that the plurality of network nodes includes a first network node and a second network node. In such cases, it may be that the first network node is configured to identify a plurality of signal transmission paths between the first network node and the second network node. It may be that each of the signal transmission paths in the plurality follows a distinct route through the communication network to that followed by each of the other signal transmission paths in the plurality. The skilled person will appreciate that a distinct route, in this context, means that the signal transmission paths are transmitted, for at least part of their length, over different network links (for example, via different signal bearers). The first network node may be configured to selectively route network traffic via one or more of the plurality of signal transmission paths. It may be that the plurality of network nodes includes (in addition to a first network node and a second network node) a third network node. In such cases, it may be that at least one of the one or more signal transmission paths between the first node and the second node identified by the first node passes via the third node. Thus, it may be that at least one (for example, all) of the signal transmission paths between two network nodes in the plurality pass through one or more other network nodes in the plurality. It may be that a network node in the plurality (for example, each network node in the plurality) is configured to identify, for at least one (for example, all) of the other network nodes in the plurality, a plurality of signal transmission paths from the network node to the other network node.

It will be appreciated by the skilled person that two signal transmission paths which follow distinct routes through the communication network can provide differing performance. Thus, selectively routing network traffic based on performance metrics characterising the performance of the signal transmission paths can allow the most appropriate signal transmission path (for example, having the best performance) to be selected. This can provide improved communication network performance.

It may be that each network node in the plurality is configured to repeat the identifying and determining to update the one or more performance metrics. In such cases, it may be that each network node in the plurality is configured to route network traffic addressed to the second node on the basis of the updated one or more performance metrics. It may be that the repeating of the identifying and determining is performed periodically. It may be that the repeating of the identifying and determining is performed in response to a transmission failure of network traffic over the communication network. It may be that the repeating of the identifying and determining is performed in response to a change in topology of the communication network. In such cases, it may be that the change in topology comprises one or more (for example, all) of: removal of a network node from the communication network, addition of a new network node to the communication network, addition of one or more new communication links between network nodes in the plurality, and removal of one or more communication links between network nodes in the plurality. Such changes in topology may, for example, result from changes in the relative physical positions of network nodes (for example, as network nodes move out of range of one another or are obstructed by the environment) or the addition or removal of network nodes from the communication network (for example, due to damage to and/or replacement of network nodes).

Repeating the identifying of the signal transmission paths and then determining updated performance metrics allows the communication network to adapt to a change in the configuration or performance of the communication network or one or more of its constituent parts. Changes in the configuration or performance of the network may, for example, arise due to one or more of: congestion on network links within the communication network, jamming of network links within the communication network, damage to a network node, or changes in the relative physical positions of nodes in the communication network. By repeating the identifying and determining periodically, the communication network can maintain up-to-date performance metrics, allowing the communication network to continually adapt to the current statuses of the network. Repeating the identifying and determining in response to a transmission failure of network traffic over the communication network can allow the communication network to quickly adapt to the transmission failure (for example, to prevent reoccurrence of the failure). Repeating the identifying and determining in response to a change in topology of the communication network can allow the communication network to quickly adapt to those changes in topology (for example, to ensure that subsequent routing of network is optimised for the new topology).

It may be that determining the one or more performance metrics comprises, for each of the plurality of signal transmission paths, transmitting to the other node via the signal transmission path a network path characterisation signal. Thus, the determining may comprise transmitting a plurality of network path characterisation signals. It may be that the routing of the network traffic is performed on the basis of the plurality of network path characterisation signals. It may be that the network path characterisation signal is configured to enable the network node to determine one or more performance characteristics of the signal transmission path over which the signal is transmitted. It may be that the one or more performance metrics comprise one or more of: bandwidth, latency, bit error rate, packet jitter, and a packet loss rate. Thus, it may be that the one or more performance metrics may facilitate comparison of the signal transmission paths. The one or more performance metrics may quantify one or more characteristics of data transmission over the signal transmission paths. Determining the one or more performance metrics may comprise receiving, from the other node, responses to the network path characterisation signals. In such cases, it may be that the determining of the one or more performance metrics is performed on the basis of the received responses. It may be that the network path characterisation signal comprises one or more of: an HTTP get request, a DNS request, and a ping.

It may be that each network node in the plurality is configured to determine one or more classes of data represented by the network traffic. In such cases, it may be that each network node in the plurality is configured to route the network traffic further on the basis of the determined one or more classes. It may be that each of the one or more classes of data is associated with a link performance required by the class. It may be that each of the one or more classes of data is associated with a quality of service required by the class. It may be that the one or more classes of data indicate one or more of: a priority of the data, a required bandwidth, and a required latency. Where the first network node is configured to selectively route network traffic via one or more of the plurality of signal transmission paths, it may be that the selective routing is performed on the basis of the determined one or more classes. It may be that the routing of the network traffic is performed so as to provide the required link performance associated with the class of data. It may be that the routing of the network traffic is performed so as to provide the required quality of service associated with the class of data.

By determining one or more classes of data represented by the network traffic and routing the network traffic on the basis of the determined one or more classes, the communication network can route network traffic using the signal transmission paths which are most appropriate for the type of network traffic being transmitted. For example, where the network traffic comprises live video footage the network node may select to route the network traffic via a signal transmission path providing high bandwidth and low latency. By contrast, where the network traffic comprises a large quantity of non-time sensitive data, the network node may select to route the network traffic via a signal transmission path providing high bandwidth but high latency. This can provide further improved network performance.

It may be that determining the one or more classes of data represented by the network traffic comprises identifying one or more markers (for example, differentiated services code point (DSCP) markers) in the network traffic. It may be that the network node is configured to determine a type of data being transmitted (for example, video content, audio content, text data, etc...) and assign the network traffic to one or more classes on the basis of the determined type. It will be appreciated by the skilled person that other means for marking and/or identifying the classes of data represented by the network traffic may alternatively (or additionally) be used.

It may be that the network comprises a mesh network (for example, a fully interconnected mesh network). As described above, the present invention enables adaptive routing in network topologies not having a "hub-and-spoke" architecture or a central controlling hub device. In particular, the present invention enables adaptive routing in mesh networks (for example, as are commonly used in deployed military networks).

It may be that the network comprises (for example, consists of) a military network (for example, a deployed military network. It may be that one or more (for example, all) of the plurality of network nodes comprises part of a military system. It may be that one or more (for example, all) of the plurality of network nodes comprises part of one or more of: a military aircraft, an armoured vehicle, a man-portable infantry radio, a military satellite, a warship, or a ground-based command centre.

It may be that the one or more performance metrics characterise the end-to-end performance of each signal transmission path. Thus, it may be that the network nodes are configured to determine one or more performance metrics associated with the signal transmission path as a whole (as opposed to merely a part of the signal transmission path). It may be that the identifying of the one or more signal transmission paths and the determining of the one or more performance metrics is performed at or above a network layer of the communication network. Thus, it may be that the determining of the one or more performance metrics is performed without regard to the type of bearer(s) underpinning the signal transmission path.

It may be that the network traffic comprises one or more of: text data, audio data, video data, real-time audio data, real-time video data, and control data. It will be appreciated by the skilled person that the present invention does not rely on any specific type of network traffic, and rather is generally applicable to all types of traffic conveyed by the communication network. Thus, the network traffic may, alternatively or additionally, comprise other types of data.

According to a second aspect of the present invention, there is provided method of operating a communication network, the communication network comprising a plurality of network nodes, the method comprising, at each network node in the plurality:
identifying, for each of the other network nodes in the plurality, one or more signal transmission paths from the network node to the other network node,
determining, for each of identified signal transmission paths, one or more performance metrics associated with the signal transmission path; and
routing network traffic addressed to the other node on the basis of the determined one or more performance metrics.

According to a third aspect of the present invention, there is provided computer-readable storage medium comprising instructions which, when executed by one or more computing devices, cause the one or more computing devices to carry out a method of operating a communication network, the communication network comprising a plurality of network nodes, the method comprising, at each network node in the plurality:
identifying, for each of the other network nodes in the plurality, one or more signal transmission paths from the network node to the other network node,
determining, for each of identified signal transmission paths, characterising one or more performance metrics associated with the signal transmission path; and
routing network traffic addressed to the other node on the basis of the determined one or more performance metrics.

It will of course be appreciated that features described in relation to one aspect of the present invention may be incorporated into other aspects of the present invention. For example, the method of the invention may incorporate any of the features described with reference to the apparatus of the invention and vice versa.

### BRIEF DESCRIPTION OF THE FIGURES

Embodiments of the invention will now be described by way of example only with reference to the figures, in which:
Figure 1 shows a schematic view of a communication network of the prior art;
Figure 2 shows a schematic view of a communication network according to a first embodiment of the invention;
Figure 3 shows a schematic view of a network node of Figure 2; and
Figure 4 shows a flow chart illustrating the steps of a method according to a second embodiment of the invention.

### DETAILED DESCRIPTION

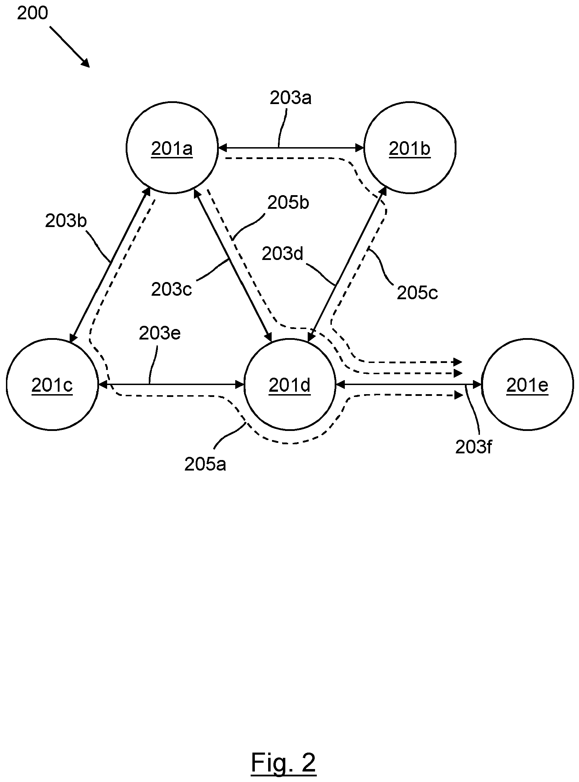

Figure 2 shows a schematic view of a communication network 200 according to a first embodiment of the invention.

The communication network 200 comprises a plurality of network nodes 201a, 201b, 201c, 201d, 201e. Whilst, in this example embodiment, the communication network 200 comprises five network nodes, it will be appreciated by the skilled person that, in other embodiments, the communication network 200 may comprise more or fewer network nodes. The communication network 200 is arranged in a mesh topology. A first network node 201a is connected to: a second network node 201b via a first network link 203a, a third network node 201c via a second network link 203b, and a fourth network node 201d via a third network link 203c. The second network node 201b is further connected to the fourth network node 201d via a fourth network link 203d. The third network node 201c is further connected to the fourth network node 201d via a fifth network link 203e. The fourth network node 201d is further connected to a fifth network node 201e via a sixth network link 203f.

Each of the network nodes 201a, 201b, 201c, 201d, 201e are substantially identical and operate in substantially the same way. It will, however, be appreciated by the skilled person that each network node may comprise part of a respective larger system or apparatus and that those systems or apparatus may include different components and/or provide different functionality. For example, the first network node 201a may comprise part of an aircraft, while the second network node 201b may comprise part of a ground station and the third network node 201c may comprise part of a watercraft.

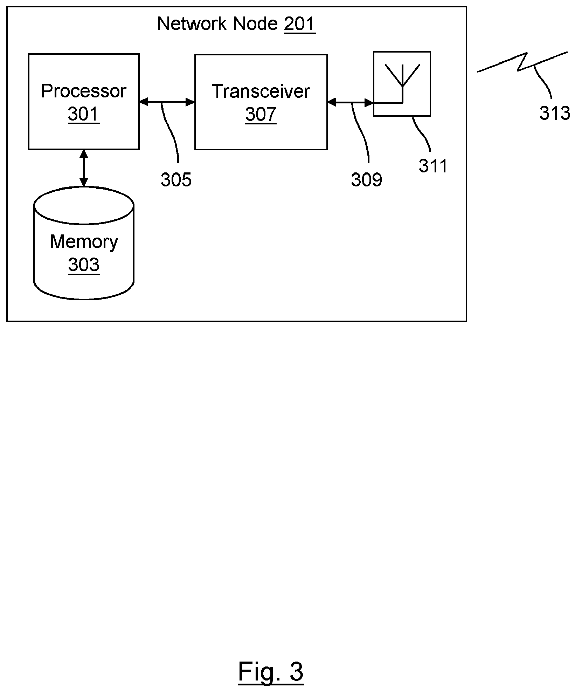

Figure 3 shows a schematic view of a network node 201. The network node 201 comprises a processor 301 and an associated memory 303.

The processor 301 is configured (for example, by virtue of instructions stored in the memory 303) to execute one or more applications relying on communication with one or more other network nodes. For example, the one or more applications may comprise one or more of video conferencing, audio calls, capture and onward transmission of images or video footage, and general relaying of data. To that end, the processor is configured to generate application data 305 associated with the one or more applications. The network node 201 further comprises a transceiver 307 configured to receive the application data and generate communication data 309 suitable for transmission over the communication network 200. In this example embodiment, the network node 201 further comprises an antenna 311. Thus, the network node 201 is configured, in this example embodiment, to operate a wireless interface with the wider communication network 200. However, it will be appreciated by the skilled person that, in other embodiments, the network node 201 may be configured to operate a wired interface with the wider communication network 200. The antenna is configured to generate wireless communication signals 313 to transmit the communication data 309 to other network nodes in the communication network 200. Similarly, the antenna 311 and transceiver 307 are configured to receive wireless communication signals 313 and extract from the wireless communication signals 313 application data from other network nodes in the communication network 200.

Returning to Figure 2, the operation of the communication network 200 is described below in respect to the operation of the first network node 201a. However, it will be appreciated by the skilled person that each of the other network nodes 201b, 201c, 201d, 201e is configured to operate similarly. The network node 201a is configured (for example, by operation of the processor 301 based on instructions stored in the memory 303) to identify, for each of the other network nodes 201b, 201c, 201d, 201e, one or more signal transmission paths from the first network node 201a to the other network node 201b, 201c, 201d, 201e. Thus, in this example embodiment, the first network node 201a is configured to identify: (i) one or more signal transmission paths between the first network node 201a and the second network node 201b, (ii) one or more signal transmission paths between the first network node 201a and the third network node 201c, (iii) one or more signal transmission paths between the first network node 201a and the fourth network node 201d, and (iv) one or more signal transmission paths between the first network node 201a and the fifth network node 201e.

As an example, the one or more signal transmission paths between the first network node 201a and the fifth network node 201e are illustrated by dashed lines 205a, 205b, 205c. A first signal transmission path 205a passes via network link 203b, network node 201c, network link 203e, network node 201d, and network link 203f. A second signal transmission path 205b passes via network link 203c, network node 201d, and network link 203f. A third signal transmission path 205c passes via network link 203a, network node 201b, network link 203d, network node 201d, and network link 203f. Thus, the three signal transmission paths 205a, 205b, 205c each follow a distinct route through the communication network 200.

The first network node 201a is further configured to determine, for each of identified signal transmission paths 205a, 205b, 205c, one or more performance metrics characterising performance of the signal transmission path. The first network node 201a is further configured to store the determined one or more performance metrics (for example, in the memory 303). The one or more performance metrics characterise the end-to-end performance of each signal transmission path and include bandwidth, latency, bit error rate, packet jitter, and packet loss rate.

To determine the one or more performance metrics, the first network node 201a is configured to transmit to the fifth network node 201e via each of the signal transmission paths 205a, 205b, 205c a network path characterisation signal. Thus, the first network node 201a is configured to transmit: a first network path characterisation signal to the fifth network node 201e via the first signal transmission path 205a, a second network path characterisation signal to the fifth network node 201e via the second signal transmission path 205b, and a third network path characterisation signal to the fifth network node 201e via the third signal transmission path 205c.

The first network node 201a is further configured to receive, from the fifth network node 201e, responses to the network path characterisation signals. Thus, the first network node 201a is configured to receive a response to each of the three network path characterisation signals. In this example embodiment, the network path characterisation signal comprises a DNS request. However, it will be appreciated by the skilled person that, in alternative embodiments, the network path characterisation signal may comprise other types of signal (for example, an HTTP get request or a ping). Similarly, it will be appreciated by the skilled person that the network path characterisation signal may comprise a combination of multiple different signals (for example, the network path characterisation signal may comprise a DNS request, an HTTP get request, and a ping). The first network node 201a is configured to determine the network performance data on the basis of the received responses.

The first network node 201a is also configured to respond to network path characterisation signals received from the other network nodes 201b, 201c, 201d, 201e in the communication network 200. Thus, the first network node 201a is also configured to facilitate the determining by other network nodes of performance metrics.

Because the determining of the one or more performance metrics is performed based on the transmission of the network path characterisation signals and the receipt of the responses to those network path characterisation signals, the determining of the one or more performance metrics is performed at or above a network layer of the communication network. Thus, there is no need for any direct interaction or communication between the first network node 201a and the bearers underlying any of the network links 203a, 203b, 203c, 203d, 203e, 203f. This enables the first network node 201a to determine the performance metrics even where security protocols prevent communication between the first network node 201a and the underlying bearer.

The first network node 201a is configured to selectively route network traffic addressed to the other network nodes 201b, 201c, 201d, 201e on the basis of the determined one or more performance metrics. Thus, network traffic at the first network node 201a addressed to the fifth network node 201e is transmitted to the fifth network node 201e over one of the three identified signal transmission paths 205a, 205b, 205c. Which of the three identified signal transmission paths 205a, 205b, 205c is used is selected on the basis of the determined one or more performance metrics. The network traffic can comprise any data intended for transmission over the communication network 200, but may, for example, include one or more of: text data, audio data, video data, real-time audio data, real-time video data, and control data.

In this example embodiment, the first network node 201a is further configured to determine one or more classes of data represented by network traffic generated at the first network node 201a. Each of the one or more classes of data is associated with a specific network quality of service required by the class. In particular, the one or more classes of data indicate a priority of the data, a required bandwidth, and a required latency. In this example embodiment, the network traffic is marked using differentiated services code point (DSCP) markers and the determining of the one or more classes of data is performed by identifying DCSP markers contained in the network traffic. However, it will be appreciated by the skilled person that other means for marking and/or identifying the classes of data represented by the network traffic may alternatively (or additionally) be used. For example, in alternative embodiments, the first network node 201a may operate to determine a type of data being transmitted (for example, video content, audio content, text data, etc...) and assign the network traffic to one or more classes on the basis of the determined type.

The first network node 201a is configured to perform the selective routing of the network traffic further on the basis of the determined one or more classes. Thus, the first network node 201a is configured to select one of the three identified signal transmission paths 205a, 205b, 205c on the basis of the type of network traffic being transmitted. For example, where the network traffic comprises live video footage, it is important that the communication network 200 provides sufficient bandwidth and low latency. If, for example, the first signal transmission path 205a provides high bandwidth but high latency, the second signal transmission path 205b provides low latency but limited bandwidth, and the third signal transmission path 205c provide high bandwidth and low latency, the first network node 201a may select to transmit the network traffic via the third signal transmission path 205c in order to provide the required quality of service. By contrast, if the network traffic comprised a large quantity of non-time sensitive data (such that network latency is unimportant), it may be that the first network node 201a selects to transmit the network traffic via the first signal transmission path 205a.

The first network node 201a is configured to periodically repeat the identifying of the signal transmission paths 205a, 205b, 205c and the determining of one or more performance metrics to generate updated performance metrics. Thus, the one or more performance metrics are regularly refreshed, such that they reflect a current state of the communication network 200, even where that state is changing over time (for example, due to varying atmospheric states, jamming by malicious actors, or varying traffic levels). The routing of network traffic is subsequently performed on the basis of the updated one or more performance metrics.

Whilst, in this example embodiment, the identifying of the signal transmission paths 205a, 205b, 205c and the determining of the one or more performance metrics is repeated periodically, it will be appreciated by the skilled person that, in other embodiments, the repeating may be performed in response to other events than the passage of time. For example, the repeating may be performed in response to one or more of: a transmission failure of network traffic over the communication network, a change in topology of the communication network, and user input at the network node. It will be appreciated by the skilled person that a change in topology comprises one or more of: removal of a network node 201a, 201b, 201c, 201d, 201e from the communication network 200, addition of a new network node 201a, 201b, 201c, 201d, 201e to the communication network 200, addition of one or more new communication links 203a, 203b, 203c, 203d, 203e, 203f between the network nodes 201a, 201b, 201c, 201d, 201e, and removal of one or more communication links 203a, 203b, 203c, 203d, 203e, 203f between the network nodes 201a, 201b, 201c, 201d, 201e.

Each of the other network nodes 201b, 201c, 201d, 201e in the communication network 200 is configured to operate as described above in respect of the first network node 201a, such that each network node 201a, 201b, 201c, 201d, 201e operates to determine, independently of any other network nodes or device, its own data on the performance of the communication network 200 and route its network traffic accordingly.

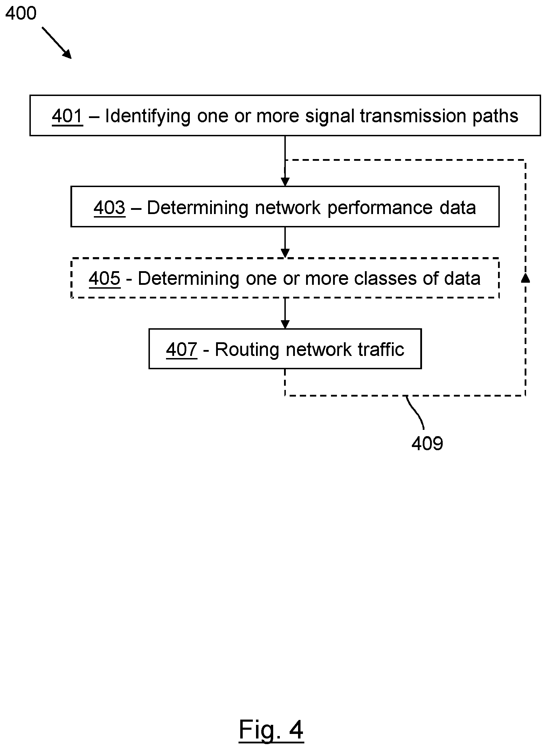

Figure 4 shows a flow chart illustrating the steps of a method 400 of operating a communication network according to a second embodiment of the invention. The communication network comprises a plurality of network nodes. The method 400 is performed at each of the network nodes in the plurality. The network may comprise a mesh network.

A first step of the method 400, represented by item 401, comprises identifying, for each of the other network nodes in the plurality, one or more signal transmission paths from the network node to the other network node.

It may be that the plurality of network nodes includes a first network node and a second network node. In such cases, it may be that the first network node is configured to identify a plurality of signal transmission paths between the first network node and the second network node. It may be that each of the identified signal transmission paths in the plurality follows a distinct route through the communication network to that followed by each of the other signal transmission paths in the plurality. The identifying of the one or more signal transmission paths may be performed at or above a network layer of the communication network. The plurality of network nodes may further include a third network node. In such cases, it may be that at least one of the one or more signal transmission paths between the first node and the second node identified by the first node passes via the third node.

A second step of the method 400, represented by item 403, comprises determining, for each of identified signal transmission paths, one or more performance metrics associated with the signal transmission path.

Determining the one or more performance metrics may comprise, for each of the plurality of signal transmission paths, transmitting to the other node via the signal transmission path a network path characterisation signal. In such cases, determining the one or more performance metrics may comprise receiving, from the other node, responses to the network path characterisation signals. The determining of the one or more performance metrics may be performed on the basis of the received responses. The network path characterisation signal may comprise one or more of: an HTTP get request, a DNS request, and a ping. The one or more performance metrics may comprise one or more of: bandwidth, latency, bit error rate, packet jitter, and a packet loss rate. It may be that the determined one or more performance metrics characterise the end-to-end performance of each signal transmission path. The determining of the one or more performance metrics may be performed at or above a network layer of the communication network.

An optional third step of the method 400, represented by item 405, comprises determining one or more classes of data represented by network traffic addressed to the other node.

Each of the one or more classes of data may be associated with a quality of service required by the class. The one or more classes of data may indicate one or more of: a priority of the data, a required bandwidth, and a required latency. The network traffic may comprise one or more of: text data, audio data, video data, real-time audio data, real-time video data, and control data.

A fourth step of the method 400, represented by item 407, comprises routing network traffic addressed to the other node on the basis of the determined one or more performance metrics.

It may be that the first network node is configured to selectively route network traffic via one or more of the plurality of signal transmission paths. It may be that the routing of the network traffic is performed further on the basis of the determined one or more classes. The selective routing may be performed on the basis of the determined one or more classes.

It may be that the method comprises repeating, represented by dashed line 409, the identifying and determining to update the network performance data. In such cases, it may be that the routing of network traffic addressed to the second node is performed on the basis of the updated network performance data. The repeating of the identifying and determining may be performed periodically. The repeating of the identifying and determining may be performed in response to a transmission failure of network traffic over the communication network. The repeating of the identifying and determining may be performed in response to a change in topology of the communication network. Such a change in topology may comprise one or more of: removal of a network node from the communication network, addition of a new network node to the communication network, addition of one or more new communication links between network nodes in the plurality, and removal of one or more communication links between network nodes in the plurality.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Whilst the illustrated embodiments show a communication network incorporating five network nodes, it will be appreciated by the skilled person that the invention is generally applicable to networks or different sizes and having different numbers of nodes and network links.

It will also be appreciated by the skilled person that the network nodes 201a, 201b, 201c, 201d, 201e may each form part of a respective larger system. For example, a network node 201 may comprises part of an aircraft, a ground vehicle, a watercraft, a satellite, or a ground station. Thus, it may be that the processor 301 (for example, by executing instructions stored in the memory 303) is also configured to execute one or more further applications in support of the operating of that larger system. For example, where the network node 201 forms part of a vehicle, the one or more further applications may relate to control of that vehicle.

It will be appreciated that the network nodes 201a, 201b, 201c, 201d, 201e each comprise one or more processors 301 and memory 303. The processor 301 and the associated memory 303 may be configured to perform one or more of the above-described functions of the network node 201. Each device, module, component, machine or function as described in relation to any of the examples described herein (for example, transceiver 307) may similarly comprise a processor or may be comprised in apparatus comprising a processor. One or more aspects of the embodiments described herein comprise processes performed by apparatus. In some examples, the apparatus comprises one or more processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also include computer programs, particularly computer programs on or in a carrier, adapted for putting the above-described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The one or more processors of the network nodes 201a, 201 b, 201c, 201d, 201e may comprise a central processing unit (CPU). The one or more processors may comprise a graphics processing unit (GPU). The one or more processors may comprise one or more of a field programmable gate array (FPGA), a programmable logic device (PLD), or a complex programmable logic device (CPLD). The one or more processors may comprise an application specific integrated circuit (ASIC). It will be appreciated by the skilled person that many other types of device, in addition to the examples provided, may be used to provide the one or more processors. The one or more processors may comprise multiple co-located processors or multiple disparately located processors. Operations performed by the one or more processors may be carried out by one or more of hardware, firmware, and software.

The one or more processors may comprise data storage. The data storage may comprise one or both of volatile and non-volatile memory. The data storage may comprise one or more of random access memory (RAM), read-only memory (ROM), a magnetic or optical disk and disk drive, or a solid-state drive (SSD). It will be appreciated by the skilled person that many other types of memory, in addition to the examples provided, may also be used. It will be appreciated by a person skilled in the art that the one or more processors may each comprise more, fewer and/or different components from those described.

The techniques described herein may be implemented in software or hardware, or may be implemented using a combination of software and hardware. They may include configuring an apparatus to carry out and/or support any or all of techniques described herein. Although at least some aspects of the examples described herein with reference to the drawings comprise computer processes performed in processing systems or processors, examples described herein also extend to computer programs, for example computer programs on or in a carrier, adapted for putting the examples into practice. The carrier may be any entity or device capable of carrying the program. The carrier may comprise a computer readable storage media. Examples of tangible computer-readable storage media include, but are not limited to, an optical medium (e.g., CD-ROM, DVD-ROM or Blu-ray), flash memory card, floppy or hard disk or any other medium capable of storing computer-readable instructions such as firmware or microcode in at least one ROM or RAM or Programmable ROM (PROM) chips.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A communication network comprising a plurality of network nodes, wherein each network node in the plurality is configured to:
identify, for each of the other network nodes in the plurality, one or more signal transmission paths from the network node to the other network node;
determine, for each of identified signal transmission paths, one or more performance metrics associated with the signal transmission path; and
route network traffic addressed to the other node on the basis of the determined one or more performance metrics.

2. A communication network according to claim 1 wherein:
the plurality of network nodes includes a first network node and a second network node;
the first network node is configured to identify a plurality of signal transmission paths between the first network node and the second network node,

3. A communication network according to claim 2, wherein each of the signal transmission paths in the plurality follows a distinct route through the communication network to that followed by each of the other signal transmission paths in the plurality.

4. A communication network according to claim 2 or 3, wherein the first network node is configured to selectively route network traffic via one or more of the plurality of signal transmission paths.

5. A communication network according to any preceding claim, wherein each network node in the plurality is configured to:
repeat the identifying and determining to update the one or more performance metrics; and
route network traffic addressed to the second node on the basis of the updated one or more performance metrics.

6. A communication network according to any preceding claim, wherein:
determining the one or more performance metrics comprises:
for each of the plurality of signal transmission paths, transmitting to the other node via the signal transmission path a network path characterisation signal;
receiving, from the other node, responses to the network path characterisation signals, and
the determining of the one or more performance metrics is performed on the basis of the received responses.

7. A communication network according to any preceding claim, wherein each network node in the plurality is configured to:
determine one or more classes of data represented by the network traffic; and
route the network traffic further on the basis of the determined one or more classes.

8. A communication network according to claims 4 and 7, wherein the selective routing is performed on the basis of the determined one or more classes.

9. A communication network according to claims 7 or 8, wherein:
each of the one or more classes of data is associated with a quality of service required by the class; and
the one or more classes of data indicate one or more of: a priority of the data, a required bandwidth, and a required latency.

10. A communication network according to any preceding claim, wherein the one or more performance metrics characterise the end-to-end performance of each signal transmission path.

11. A communication network according to any preceding claim, wherein the identifying of the one or more signal transmission paths and the determining of the one or more performance metrics is performed at or above a network layer of the communication network.

12. A communication network according to any preceding claim, wherein:
the plurality of network nodes includes a first network node, a second network node, and a third network node;
at least one of the one or more signal transmission paths between the first node and the second node identified by the first node passes via the third node.

13. A communication network according any preceding claim, wherein the one or more performance metrics comprise one or more of: bandwidth, latency, bit error rate, packet jitter, and a packet loss rate.

14. A method of operating a communication network, the communication network comprising a plurality of network nodes, the method comprising, at each network node in the plurality:
identifying, for each of the other network nodes in the plurality, one or more signal transmission paths from the network node to the other network node;
determining, for each of identified signal transmission paths, one or more performance metrics associated with the signal transmission path; and
routing network traffic addressed to the other node on the basis of the determined one or more performance metrics.

15. A computer-readable storage medium comprising instructions which, when executed by one or more computing devices, cause the one or more computing devices to carry out a method of operating a communication network, the communication network comprising a plurality of network nodes, the method comprising, at each network node in the plurality:
identifying, for each of the other network nodes in the plurality, one or more signal transmission paths from the network node to the other network node;
determining, for each of identified signal transmission paths, one or more performance metrics associated with the signal transmission path; and
routing network traffic addressed to the other node on the basis of the determined one or more performance metrics.
